# EUROPEAN PATENT APPLICATION

(11) **EP 3 815 916 A1**
(43) Date of publication of application: **05.05.2021**
(21) Application number: 19207009.2
(22) Date of filing: 04.11.2019
(51) Int. Cl.: B41M 5/24, A61J 1/00, B41M 5/26

(54) **CONTAINER COMPRISING A BODY WITH A MARKING ELEMENT AND A METHOD FOR PRODUCING A CONTAINER**

(71) Applicant: Schott AG, 55122 Mainz (DE)
(72) Inventor: Sohr, Oliver, 55116 Mainz (DE); Hunzinger, Bernhard, 55263 Wackernheim (DE); Maurer, Florian, 64347 Griesheim (DE); Thomas, Peter, 56073 Koblenz (DE)
(74) Representative: Fuchs Patentanwälte Partnerschaft mbB

(57) **Abstract**

The present invention relates to a container, for holding at least one pharmaceutical composition, comprising a body which has at least one marking element and to a method for producing a container, preferably a container according to the present invention.

## Description

The present invention relates to a container, for holding at least one pharmaceutical composition, comprising a body which has at least one marking element and to a method for producing a container, preferably a container according to the present invention.

In the state of the art containers for holding pharmaceutical compositions such as vials, syringes, cartridges and the like are well known. For such containers it is often required to have means which allow to identify each single container among others. This can be important for example for the purpose of an automation of handling the containers during filling, routing, storing, dispatching as well as for ensuring quality and safety standards which often put high demands on the traceability of each container during its lifetime cycle. Often said identification means are designed in form of a marking element which is then used in order to fulfill the mentioned requirements.

So far, often a label has been glued on each container and a unique identification code such as a barcode has been printed on the label. In other applications the unique identification code has been transferred directly on the container by means of a printing process using ink. Thus, both approaches require a printed code. By reading the respective unique identification code the container can be identified once a link between the container and the unique identification code has been established.

However, gluing labels on the surface, or using a printer is often slow and complicated during use, hence, often representing a bottle neck in the production line. The size of these printed codes is usually limited by the printing method and cannot be reduced sufficiently in order to create the required small codes. Particularly for small containers it is hard or even not possible to provide a sufficiently large area to glue a label onto. Often containers exhibit a complex geometry, which makes it difficult to use labels or printers for the purpose of providing an identification code on them.

Furthermore, it turned out that during further handling or use of the containers there is a risk that the labels of the containers peel off or that codes printed directly on the containers using ink vanish, if the containers are exposed to water or other extreme conditions. In addition, it also turned out that it is a general problem that codes provided by these known techniques are subject to fading over time.

These drawbacks lead to the situation that containers which cannot be identified anymore have to be disposed, either because the labels have been completely lost or because they are no longer readable.. This is especially the case in the pharmaceutical field where it is not tolerable that substances of unknown identification are in use. However, particularly in this field disposing containers comprising respective compositions is quite expensive. Apart from that sorting out containers whose identification is unclear might lead to downtimes of the system or at least requires extra resources. In any event, using such conventional marking elements might lead to increased service costs.

An even more serious scenario is an incorrect identification and subsequent incorrect assignment of a container due to a vanishing unique identification code. In the worst case, this might lead to serious health risks of the patient.

In the art, it is also known to use techniques for graving information such as a marking element directly in the surface of a container, for example by means of laser ablation techniques or the like. A marking element provided in that way on the container would indeed be cheap in the production process and would have further advantages with respect to durability and reliability. However, for glass containers, such as glass vials, used in the pharmaceutical industry, axial compression and side compression have been identified as common and typical load situations during handling, processing and transportation. This, however, requires that the container must be sufficiently robust to withstand such typical loads. Since marking elements graved in the surface represent a damage of the container, such marking elements are usually not taken into consideration for respective applications where the containers are subject to said loads.

It is, thus, an object of the present invention to overcome the disadvantages described above by providing a container having a marking element which is on the one hand easy and cheap to produce but on the other hand still reliable, durable and fail safe and which is particularly suitable for a wide range of containers with respect to size and geometry. It is a further object of the present invention to provide a method for producing a container having such a marking element.

### Description of the invention

The problem is solved by the invention according to a first aspect by a container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is derived and/or derivable from at least one simulation result of at least one simulation based on a finite element method of the stress parameter for at least one surface and/or volume area of the body with or without the marking element present; wherein at least one mean value is or can be obtained by means of the simulation for the stress parameter for at least a part of the surface and/or volume area of the body; wherein the threshold value is the sum of the mean value and 1000 % or less of the absolute value of the mean value.

The invention is, thus, based on the surprising finding that a marking element can be provided on the container, preferably on the body, also by means of techniques which lead to a weakening of the material, for example due to material ablation, if the location of the marking element is chosen such that for the location of the marking element one or more stress parameters are restricted to a certain threshold value. Locations fulfilling this criterion can be used for permanently graving the marking element into the container while still ensuring a high strength of the container irrespective of the damages the marking element represents in the structure of the body.

At the same time, it has been found that the threshold value can be defined in a general and universally valid manner if it is set in relation to the outcome of a simulation of stress parameters of the respective container which preferably carries the marking element. This leads to the advantageous situation that the inventive concept can be applied to all kinds of containers even if they have completely different geometries, shapes, sizes and materials since only a simulation model is required. Hence, the approach can be applied in a very flexible and universal manner.

Indeed, since products today are usually designed using respective three-dimensional models, there are no extra costs with respect to setting up a respective model for conducting a simulation according to the invention. This makes the approach even more interesting since it can be integrated easily in existing structures.

More precisely, it surprisingly turned out that obtaining a mean value of the respective stress parameter from the simulation is a preferred and quite reliable figure to establish the reference value to which the threshold value refers.

Overall, it is possible to use preferred marking techniques such as laser ablating or etching for providing a marking element on a container (preferably a body thereof). These techniques in turn enable production of very small marking elements and can even be used for complex geometries without any extensive modifications on the manufacturing process. This way the container can be of comparably low cost while there remains a high design flexibility for the body. This is true because techniques such as laser processing are not limited to any surface geometries for providing the marking element.

Applying the inventive concept allows that the marking element is graved into the material of the body, thus, the marking element is furthermore very durable, hence, reliable and fail-safe. For the same reasons, there are also no problems with respect to fading, peeling off or vanishing of the marking element.

Further analysis revealed the surprising aspect that providing the marking element by means of removing material from the body at the identified location there is no severe loss, preferably no loss, of strength for the entire container under load, although material is removed. Thus, although the material is weakened, the stability of the container is still ensured. In other words, the locations identified by means of the present invention seem to be insensitive for damages caused by graving the marking element.

The analysis have also shown that from a practical point of view the locations identified based on the simulation results are stable no matter whether the simulation is run for a model container with or without the marking element. In other words, if a first simulation incorporating a model container without a marking element finally yields a certain preferred location for the marking element based on the inventive concept, a second simulation incorporating a model container with a marking element at that preferred location finally also yields that preferred location for the marking element.

It is acknowledged that the simulation incorporated in the inventive approach can be performed with any state of the art software tool which allows modelling the container to which the marking element should be applied to and which allows running a finite element analysis simulation for that model with respect to the stress parameter under investigation. For example, the commercially available software ABAQUS with the program version 2018 released on November 7, 2017 by company DASSAULT Systems Simulia Corporation can be used to run these simulations the results of which then can be further used or which are used in the context of the present invention.

It is acknowledged that the mean value obtained by means of the simulation for the stress parameter can be any kind of mean value which is appropriate such as the average value or the average weighted value. It is acknowledged that when using the finite element analysis, the stresses are calculated for each node of an element of the mesh. Since the elements usually are of different size (for example the mesh of a vial has different sizes at the bottom and at the heel), the mean values of the stresses can be calculated weighted with a "logic element area" corresponding to that node. The person skilled in the art understands that the "logic element area" takes into account the percentage of the surface area which is assigned to the respective node. That means that for example the "logic element area" of a node might be larger for an edge compared to that of a corner, respectively, of the simulated model.

The person skilled in the art clearly understands that the "location" of the marking element might have some spatial extension. Preferably, it might have an extension in two dimensions or three dimensions. For example, a location of the marking element might be a surface area of certain size of the body on which the marking element is provided (for example by means of a laser ablation technique or etching or the like). Of course, if required the location can also be understood as a three-dimensional volume element in which the marking element is provided.

It is in addition acknowledged that labels and ink might represent a potential source of contamination and in addition might produce small particles, which is not appropriate for clean room situations. Hence, using graved marking elements, also clean room conditions are met.

In one embodiment it might alternatively or in addition be preferred that the thickness of the container, preferably the thickness of the bottom of the container, is between 0.6 and 1.7 mm.

In one embodiment it might alternatively or in addition be preferred that the depth of the marking element is graved into the surface, preferably the outer surface, of the container with a depth of 1-2 µm.

In one embodiment it might alternatively or in addition be preferred that the depth of the marking element is graved into the surface, preferably the outer surface, of the container with a depth less than 10 % of the thickness of the container, preferably of the maximum thickness of the bottom of the container.

In one embodiment it is preferred if the threshold value is the sum of the mean value and 900% of the absolute value of the mean value, is the sum of the mean value and 800% of the absolute value of the mean value, is the sum of the mean value and 700% of the absolute value of the mean value, is the sum of the mean value and 600% of the absolute value of the mean value, is the sum of the mean value and 700% of the absolute value of the mean value, is the sum of the mean value and 400% of the absolute value of the mean value, is the sum of the mean value and 300% of the absolute value of the mean value, is the sum of the mean value and 200% of the absolute value of the mean value or is the sum of the mean value and 100% of the absolute value of the mean value.

In one embodiment it is alternatively or in addition preferred if the container is a vial and if the mean value is or can be obtained by means of the simulation for the stress parameter for at least a part of: the cylindrical walls of the vial, the bottom of the vial and/or the heel of the vial.

In one embodiment it is alternatively or in addition preferred if the location of the marking element at the body is partially or completely within the surface and/or volume area of the body which is used for the simulation of the stress parameter.

In one embodiment it is alternatively or in addition preferred if at said location the at least one stress parameter of the body has a value less than or equal to 90%, 80%, 70%, 60%, 50%, 40%, 30%, 20% or 10%, respectively, of the at least one threshold value.

In one embodiment alternatively or in addition the combination of the following features are particularly preferred:
A container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is derived and/or derivable from at least one simulation result of at least one simulation based on a finite element method of the stress parameter for at least one surface area of the body with or without the marking element present; wherein at least one mean value is or can be obtained by means of the simulation for the stress parameter for at least a part of the surface area of the body; wherein the threshold value is the sum of the mean value and 1000 % or less of the absolute value of the mean value.

A container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is derived from at least one simulation result of at least one simulation based on a finite element method of the stress parameter for at least one surface area of the body with or without the marking element present; wherein at least one mean value is or can be obtained by means of the simulation for the stress parameter for at least a part of the surface area of the body; wherein the threshold value is the sum of the mean value and 1000 % or less of the absolute value of the mean value.

A container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is derivable from at least one simulation result of at least one simulation based on a finite element method of the stress parameter for at least one surface area of the body with or without the marking element present; wherein at least one mean value is or can be obtained by means of the simulation for the stress parameter for at least a part of the surface area of the body; wherein the threshold value is the sum of the mean value and 1000 % or less of the absolute value of the mean value.

A container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is derived and/or derivable from at least one simulation result of at least one simulation based on a finite element method of the stress parameter for at least one volume area of the body with or without the marking element present; wherein at least one mean value is or can be obtained by means of the simulation for the stress parameter for at least a part of the volume area of the body; wherein the threshold value is the sum of the mean value and 1000 % or less of the absolute value of the mean value.

A container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is derived from at least one simulation result of at least one simulation based on a finite element method of the stress parameter for at least one volume area of the body with or without the marking element present; wherein at least one mean value is or can be obtained by means of the simulation for the stress parameter for at least a part of the volume area of the body; wherein the threshold value is the sum of the mean value and 1000 % or less of the absolute value of the mean value.

A container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is derivable from at least one simulation result of at least one simulation based on a finite element method of the stress parameter for at least one volume area of the body with or without the marking element present; wherein at least one mean value is or can be obtained by means of the simulation for the stress parameter for at least a part of the volume area of the body; wherein the threshold value is the sum of the mean value and 1000 % or less of the absolute value of the mean value.

The problem is solved by the invention according to a second aspect by a container for holding at least one pharmaceutical composition, the container comprising a body, wherein the body comprises at at least one location at least one marking element, which allows to identify the container, wherein at said location at least one stress parameter of the body has a value less than or equal to at least one threshold value; wherein the threshold value is a fixed value of 300 MPa or less.

The invention is further based on the surprising finding that a marking element can be provided on the container, preferably on the body, by means of techniques which lead to a weakening of the material, for example due to material ablation, if the location of the marking element is chosen such that for the location of the marking element one or more stress parameters are restricted to a certain threshold value. Locations fulfilling this criterion can be used for permanently graving the marking element into the container while still ensuring a high strength of the container irrespective of the damages the marking element represents in the structure of the body.

It has been found that for many practical aspects it is a good estimation to set the threshold value to a fixed value. This approach allows to determine the preferred location of the marking element in an easy and straight-forward manner based on a quite handy criterion while at the same time the approach has been proven to yield reliable results in practice.

Hence, even if no model of the container exists or if for other reasons no simulation results are available for the stress parameter, it is still possible to choose a location at the container for the marking element where it does not considerably affect the stability of the container.

For example, the fixed value might be based on empirical values which has been proven reliable in the past. Particularly the fixed value is or can be derived from other experiments and/or analysis. For example it is preferred that the fixed value is or can be derived from fractographic analysis of containers which are broken due to an applied force at the location of the marking element.

For example, fixed values obtained from a first fractographic analysis of a plurality of sample containers are between 70 MPa and 235 MPa.

For example fixed values obtained from a second fractographic analysis of a plurality of sample containers are between 80 MPa and 280 MPa.

With respect to the further advantages arising from choosing the location dependent on the stress parameter reference is made to the comments provided above with respect to the first aspect of the invention, which apply here mutatis mutandis, too.

The problem is solved by the invention according to a third aspect by a first plurality of glass containers, each glass container having a body which comprises as body parts
i) a glass tube with a first end and a further end , wherein the glass tube is characterized by a longitudinal axis L_{tube} and comprises, in a direction from the top to the bottom:
   ia) a top region that is located at the first end of the glass tube, wherein the outer diameter of the top region is dt;
   ib) a junction region that follows the top region ;
   ic) a neck region that follows the junction region , wherein the outer diameter of the neck region is dn with dn < dt;
   id) a shoulder region that follows the neck region; and
   ie) a body region that follows the shoulder region and that extends to the further end of the glass tube, wherein the thickness of the glass in the body region is lb and wherein the outer diameter of the body region is db with db > dt;
ii) a glass bottom that closes the glass tube at the further end;
wherein at least one marking element is graved into at least one surface of at least one body part;
wherein the load under which 50 % of the glass containers contained in the first plurality of glass containers break under axial compression or side compression in the axial compression test or side compression test as described herein is at least 1200 N for axial compression and 900 N for side compression; wherein the load under which 50 % of a second plurality of glass containers contained in the second plurality of glass containers break under axial compression or side compression in the axial compression test or side compression test as described herein is at least 1200 N for axial compression and 900 N for side compression; wherein the glass containers of the second plurality of glass containers are identical to the glass containers of the first plurality of glass containers with the exception of lacking a marking element; wherein the number of glass containers comprised by the first plurality of glass containers is identical to the number of glass containers comprised by the second plurality of glass containers.

The invention is, thus, based on the surprising finding that a marking element can be provided on the container, preferably on the body, by means of techniques which lead to a weakening of the material, for example due to material ablation, if the location of the marking element is chosen such that when assessing the probability that a container is broken under a certain predefined load there is statistically no considerable difference between a container having a marking element and a container having no marking element.

This approach allows to provide a marking element for a container without having any disadvantages with respect to rejects due to broken containers.

Hence, this approach allows to provide containers, preferably vials, having a marking element and having the same strength and the same breaking behavior as identical containers without such a marking element.

In one embodiment of the first and second aspect it is alternatively or in addition preferred that the stress parameter is at least one parameter of the group consisting of: first principle stress, mechanically induced tensile stress, mechanically induced compressive stress, thermally generated stresses and/or chemically generated stresses.

By choosing the stress parameter as mechanically induced tensile stress the preferred location can be chosen such that there is only a mechanically induced tensile stress which is below the threshold value. This has been found advantageous since especially for a container (or body) made of glass, the larger the tensile stresses are the more instable the container is in the respective area. Hence, an area is preferred where the mechanically induced tensile stress does not exceed a certain value. For example, the threshold can be 100 MPa, hence, the mechanically induced tensile stress must be in this case within the range of 0 .. 100 MPa (note that the mechanically induced tensile stress takes a positive value).

By choosing the stress parameter as mechanically induced compressive stress the preferred location can be chosen such that there is only a mechanically induced compressive stress which is below the threshold value. This has been found advantageous since especially for a container (or body) made of glass, the more negative the compressive stresses are the more stable the container is in the respective area. Hence, an area is preferred where the mechanically induced compressive stress does not exceed a certain value. For example, the threshold can be -50 MPa, hence, the mechanically induced compressive stress must be in this example within the range of -∞... -50 MPa (note that the mechanically induced compressive stress takes a negative value; and since the threshold is negative, the range goes from minus infinity MPa to -50 MPa). The containers will usually not exhibit compressive stresses of less than -3,000 MPa, -2,000 MPa or -1,000 MPa.

By choosing the stress parameter as the first principle stress, a combined analysis can be conducted since for a particular point on the surface of the object the first principle stress is either compressive stress or tensile stress, depending on the sign. This allows a very realistic evaluation since the first principle stress allows to consider both stress types. For example it is possible to evaluate the mean value of a certain surface area with respect to the first principle stress. This mean value indicates whether tensile stresses or the compressive stresses are more present over the respective area: The more tensile stresses are present, hence contributing to the summation over the surface area, the more positive (or less negative) the mean value is and the more compressive stresses are present, the more negative (or less positive) the mean value is. This in turn might serve as a basis for determining the threshold value which can be for example the smaller, the smaller the mean value is. Indeed, for smaller threshold values, the marking element might also be graved more deeply into the surface.

If thermally generated stresses and/or chemically generated stresses are chosen as respective stress parameters, it is possible to take into account a special treatment of the container or body. Particularly, it is noted that tempering is always beneficial after a marking element has been provided on the container in order to reduce or eliminate stresses.

In one preferred embodiment, the stress parameters are mechanically induced tensile stress and mechanically induced compressive stress.

In one embodiment of the first and second aspect it is alternatively or in addition preferred that (i) the mechanically induced tensile stress is mechanically induced tensile stress during use; (ii) the mechanically induced compressive stress is mechanically induced compressive stress during use; (iii) the thermally generated stress is tensile stresses and/or compressive stresses, preferably occurring in the body's volume and/or surface; and/or (iv) the chemically generated stress is tensile stresses and/or compressive stresses, preferably occurring in the body's volume and/or surface.

This allows to define the stress parameter such that it is regarded under realistic conditions. This means for example during use (with respect to the mechanically induced stresses) or at the respective location where the stress occurs (with respect to the generated stresses). This in turn allows a more precise analysis, hence, identifying a more reliable location for the marking element.

In one embodiment alternatively or in addition the combination of the following features are particularly preferred: the mechanically induced tensile stress is mechanically induced tensile stress during use; the mechanically induced compressive stress is mechanically induced compressive stress during use; the thermally generated stress is tensile stresses, preferably occurring in the body's volume; the thermally generated stress is tensile stresses, preferably occurring in the body's surface; the thermally generated stress is compressive stresses, preferably occurring in the body's volume; the thermally generated stress is compressive stresses, preferably occurring in the body's surface; the chemically generated stress is tensile stresses, preferably occurring in the body's volume; the chemically generated stress is tensile stresses, preferably occurring in the body's surface; the chemically generated stress is compressive stresses, preferably occurring in the body's volume; and/or the chemically generated stress is compressive stresses, preferably occurring in the body's surface.

In one preferred embodiment, the mechanically induced tensile stress is mechanically induced tensile stress during use and the mechanically induced compressive stress is mechanically induced compressive stress during use.

In one embodiment of the first, second and third aspect it is alternatively or in addition preferred that at said location the stress parameter of the body has a value less than or equal to the threshold value under at least one state condition, wherein preferably the simulation is run under the state condition.

This allows to conduct the analysis of the stress parameter under a more defined framework by setting certain environmental variables to a certain value. It is, thus, possible to improve the reliability and reproducibility of the stress parameter, hence, improving the identified location for the marking element.

In one embodiment of the first, second and third aspect it is alternatively or in addition preferred that the state condition comprises (i) an ambient pressure of the body of 1 bar; and/or (ii) at least one force acting radially and/or axially on at least one part of the body, preferably at the limit of the breaking strength of the body.

Defining the ambient pressure as state condition leads to a realistic scenario for many applications where containers are used. Furthermore, it allows reproducibility to a high degree.

Defining forces as state condition allows to assess the container under a definite scenario. For example, an extreme situation right before some event (such as breaking of the container) can be regarded. This in turn allows to obtain the locations which are preferred still under such extreme conditions.

In one embodiment alternatively or in addition the combination of the following features are particularly preferred:
The state condition comprises an ambient pressure of the body of 1 bar; the state condition comprises at least one force acting radially on at least one part of the body, preferably at the limit of the breaking strength of the body; and/or the state condition comprises at least one force acting axially on at least one part of the body, preferably at the limit of the breaking strength of the body.

In one preferred embodiment the state condition is at least one force acting axially on the body at the limit of the breaking strength of the body.

In one embodiment of the second aspect it is alternatively or in addition preferred that the fixed value is between 50 and 300 MPa, preferably between 100 and 200 MPa, more preferably 150 MPa.

For different scenarios, preferably for different loads (with respect to value and/or type) applied to the container during use, the fixed value might be adapted to reflect the situation more realistically.

In one preferred embodiment, the fixed value is 150 MPa for tensile stress and the fixed value is -500 MPa for compressive stress.

In one embodiment of the first, second and third aspect it is alternatively or in addition preferred that (i) each of two or more stress parameters of the body have a value less than or equal to respective two or more threshold values, preferably under the same or at least in part different two or more state conditions, and/or (ii) the stress parameter of the body has a value less than or equal to two or more threshold values under at least in part different two or more state conditions.

It is, thus, possible that the location for the marking element is not only identified based on one single stress parameter but on two or even more stress parameters. For example one might use the mechanically induced tensile stress as a first stress parameter and the mechanically induced compressive stress as a second stress parameter. In this case, it is furthermore possible to define either the same or two different threshold values. For example one can define a first threshold value for the first stress parameter and a second threshold value for the second stress parameter where for example the second threshold value is less than the first threshold value (for example the second threshold value is negative, say -50 MPa, and the first threshold value is positive, say +100 MPa).

The same applies mutatis mutandis also to the state condition, if such one is defined. For example the first and second stress parameter can be observed under the same state condition but also under a different one.

Accordingly, more than two stress parameters with one or more thresholds and with none or one or even more different state conditions can be defined.

It is acknowledged that, of course, at a single point of the surface of an object there is only either tensile stress or compressive stress. For example, the first principle stress might be evaluated in order to determine for each point whether it has a positive or a negative value for the first principle stress, corresponding, respectively, to tensile stress or compressive stress at that point. However, according to the invention it might be also possible to define an individual stress parameter which for example only provides values for tensile stresses or only for compressive stresses. For example, the values for such an individual stress parameter directed to the tensile stress might be obtained by keeping only the positive and zero values of the first principle stress while discarding negative values. Hence, points of the surface which are subject to compressive stress will not contribute to the evaluation of that individual stress parameter. Such individual stress parameters might be used as first or second stress parameters discussed above.

In cases where more than one state condition is used, the person skilled in the art understands that also a respective number of simulations might be incorporated. In some cases a single simulation only is required for more than one stress parameter under the same state condition.

In every case this leads to a highly flexible approach which can take into account many different aspects of the situation present and at the same time take benefits from the general inventive concept of the present invention.

In one preferred embodiment a first stress parameter is tensile stress and a second stress parameter is compressive stress under the same state condition of axial load applied to the container at the breaking limit. Respective first and second thresholds for the first and second stress parameter is obtained from a single simulation run under that state condition. In one embodiment of the first, second and third aspect it is alternatively or in addition preferred that the body (i) is designed at least in part as hollow body and/or as a tubular body; (ii) has at least one closed end, hast two open ends and/or has at least one opening; and/or (iii) has at least one inner surface which is or can be brought in contact with the pharmaceutical composition when the composition is held by the container and/or at least one outer surface which is not in contact with the composition when the composition is held by the container, wherein the location of the marking element extends across at least one area of the inner and/or outer surface.

If the marking element extends across the outer and/or inner surface it can be produced and read in an easy manner, because the surface is directly accessible for writing and reading purposes.

In one embodiment alternatively or in addition the combination of the following features are particularly preferred:
The body is designed at least in part as hollow body; the body is designed at least in part as a tubular body; the body has at least one closed end; the body has two open ends; the body has at least one opening; the body has at least one inner surface which is in contact with the pharmaceutical composition when the composition is held by the container and at least one outer surface which is not in contact with the composition when the composition is held by the container, wherein the location of the marking element extends across at least one area of the inner and/or outer surface; the body has at least one inner surface which is in contact with the pharmaceutical composition when the composition is held by the container, wherein the location of the marking element extends across at least one area of the inner surface; the body has at least one outer surface which is not in contact with the composition when the composition is held by the container, wherein the location of the marking element extends across at least one area of the outer surface; the body has at least one inner surface which can be brought in contact with the pharmaceutical composition when the composition is held by the container and at least one outer surface which is not in contact with the composition when the composition is held by the container, wherein the location of the marking element extends across at least one area of the inner and/or outer surface; the body has at least one inner surface which can be brought in contact with the pharmaceutical composition when the composition is held by the container, wherein the location of the marking element extends across at least one area of the inner surface; and/or the body has at least one outer surface which is not in contact with the composition when the composition is held by the container, wherein the location of the marking element extends across at least one area of the outer surface.

In one preferred embodiment, the body is designed as hollow tubular body with at least one closed end and at least one opening, such as a vial. In one preferred embodiment, the marking element is at the outer surface. In one preferred embodiment, the body has two open ends, such as for a syringe.

In one embodiment of the first, second and third aspect it is alternatively or in addition preferred that the body has at least one wall, preferably enclosed at least partially between the inner surface and the outer surface, wherein the location of the marking element extends at least in part across at least one volume area within the wall.

In an embodiment, the body comprises as body parts
i) a glass tube with a first end and a further end , wherein the glass tube is characterized by a longitudinal axis L_{tube} and comprises, in a direction from the top to the bottom:
   ia) a top region that is located at the first end of the glass tube, wherein the outer diameter of the top region is dt;
   ib) a junction region that follows the top region ;
   ic) a neck region that follows the junction region , wherein the outer diameter of the neck region is dn with dn < dt;
   id) a shoulder region that follows the neck region; and
   ie) a body region that follows the shoulder region and that extends to the further end of the glass tube, wherein the thickness of the glass in the body region is lb and wherein the outer diameter of the body region is db with db > dt;
ii) a glass bottom that closes the glass tube at the further end.

If the marking element extends across a volume area within the wall it is possible to further protect the marking element from damages, preferably mechanical damages, occurring due to handling or other influences, hence, providing an even more durable marking element.

In one embodiment of the first, second and third aspect it is alternatively or in addition preferred that the extension of the marking element, preferably when projected on at least one 2D plane, in at least one dimension, preferably in two or three dimensions, is small compared to the maximal extension of the container in the respective one or more directions and/or compared to the maximal overall extension of the container, wherein preferably the extension of the marking element is small if it is not more than 0.8 or 2 mm, or if it is less than 90 %, 80 %, 70 %, 60 %, 50 %, 40 %, 30 %, 20 %, 10 %, 5 %, 3 %, 1 %, 0.1 %, 0.01 % and/or 0.001 % of the respective comparative size.

Small dimensions of the marking element allow to provide a marking element for a body also in case that only limited space is available. The 2D plane is for example a plane parallel to the surface of the body. Projecting the marking element on a 2D plane allows to eliminate possible extensions in a third dimension such as a depth extension of the marking element. In other words, projecting the marking element on a 2D plane preferably allows to assess the two dimensions of the marking element which are not extending along the wall thickness of the body in which it is provided.

In one embodiment alternatively or in addition the combination of the following features are particularly preferred:
The extension of the marking element, preferably when projected on at least one 2D plane, in at least one dimension, preferably in two or three dimensions, is small compared to the maximal extension of the container in the respective one or more directions, wherein preferably the extension of the marking element is small if it is not more than 0.8 or 2 mm; the extension of the marking element, preferably when projected on at least one 2D plane, in at least one dimension, preferably in two or three dimensions, is small compared to the maximal extension of the container in the respective one or more directions, wherein preferably the extension of the marking element is small if it is less than 10 %, 5 %, 3 %, 1 %, 0.1 %, 0.01 % and/or 0.001 % of the respective comparative size; the extension of the marking element, preferably when projected on at least one 2D plane, in at least one dimension, preferably in two or three dimensions, is small compared to the maximal overall extension of the container, wherein preferably the extension of the marking element is small if it is not more than 0.8 or 2 mm; and/or the extension of the marking element, preferably when projected on at least one 2D plane, in at least one dimension, preferably in two or three dimensions, is small compared to the maximal overall extension of the container, wherein preferably the extension of the marking element is small if it is less than 10 %, 5 %, 3 %, 1 %, 0.1 %, 0.01 % and/or 0.001 % of the respective comparative size.

In one preferred embodiment the maximal extension of the marking element is less than or equal to 2 mm.

In one embodiment of the first, second and third aspect it is alternatively or in addition preferred that the marking element is graved into at least one surface of the body, preferably the inner and/or outer surface, wherein the marking element is located at the bottom of the body, preferably at the center thereof, and/or wherein the marking element, preferably when projected on at least one 2D plane, comprises at least one one-dimensional data code, at least one two-dimensional data code and/or at least one three-dimensional data code, preferably the data code allows for identification of the container.

A graved marking element is particularly durable and easy to manufacture, for example by means of at least one laser and/or laser ablating technique. A preferred type of laser is a Diode Pumped Solid State (DPSS) Laser, a fiber laser or a Flash Lamp Pumped Solid State laser. Indeed, UV lasers might also be particularly preferred, preferably having a wavelength of 250 to 500 nm. They are suitable for ablating techniques since they are fast and reliable and allow fabricating small structures. However, also lasers having a wavelength between 250 and 600 nm might preferably be employed. In certain embodiments also a CO₂ laser might be employed..

If the marking element is located at the bottom, preferably near the center of the bottom, more preferably at the center of the bottom, of the body it can be read comfortably from beneath the container where it is always in the field of view.

Choosing a respective one or multi-dimensional data code allows complying with requirements with respect to data density, data processing, redundancy or the like because different types of codes allow to encode different amounts of data. Furthermore, different types of codes might affect the container differently since they represent different degrees of damages of the body.

The 2D plane is for example a plane parallel to the surface of the body. Projecting the marking element on a 2D plane allows to eliminate possible extensions in a third dimension such as a depth extension of the marking element, hence, providing a more clear assessment of the dimension of the marking element.

In one embodiment alternatively or in addition the combination of the following features are particularly preferred: the marking element is graved into at least one surface of the body, preferably the inner surface, wherein the marking element is located at the bottom of the body, preferably at the center thereof; the marking element, preferably when projected on at least one 2D plane, comprises at least one one-dimensional data code, preferably the data code allows for identification of the container; the marking element is graved into at least one surface of the body, preferably the inner surface, wherein the marking element is located at the bottom of the body, preferably at the center thereof; the marking element, preferably when projected on at least one 2D plane, comprises at least one two-dimensional data code, preferably the data code allows for identification of the container; the marking element is graved into at least one surface of the body, preferably the inner surface, wherein the marking element is located at the bottom of the body, preferably at the center thereof; the marking element, preferably when projected on at least one 2D plane, comprises at least one three-dimensional data code, preferably the data code allows for identification of the container; the marking element is graved into at least one surface of the body, preferably the outer surface, wherein the marking element is located at the bottom of the body, preferably at the center thereof, wherein the marking element, preferably when projected on at least one 2D plane, comprises at least one one-dimensional data code, preferably the data code allows for identification of the container; the marking element is graved into at least one surface of the body, preferably the outer surface, wherein the marking element is located at the bottom of the body, preferably at the center thereof, wherein the marking element, preferably when projected on at least one 2D plane, comprises at least one two-dimensional data code, preferably the data code allows for identification of the container; and/or the marking element is graved into at least one surface of the body, preferably the outer surface, wherein the marking element is located at the bottom of the body, preferably at the center thereof, wherein the marking element, preferably when projected on at least one 2D plane, comprises at least one three-dimensional data code, preferably the data code allows for identification of the container.

In one preferred embodiment, the marking element is graved into at least one outer surface of the body.

In one embodiment of the first, second and third aspect it is alternatively or in addition preferred that the data code, preferably when projected on at least one 2D plane, comprises a plurality of dot-like elements and/or line-like elements, preferably in form of at least one matrix code, preferably at least one dot matrix code. Dots and lines are easy to produce and reliable for reading purposes.

The 2D plane is for example a plane parallel to the surface of the body. Projecting the marking element on a 2D plane allows to eliminate possible extensions in a third dimension such as a depth extension of the marking element, hence, providing a more clear assessment of the elements comprised by the data code.

In one preferred embodiment, the data code comprises a plurality of dot-like elements and line-like elements in form of a matrix code.

In one embodiment of the first, second and third aspect it is alternatively or in addition preferred that (i) the marking element is produced and/or can be produced by means of at least one laser ablation technique, at least one etching technique, preferably at least one dry etching technique, at least one lithographic technique, at least one sandblasting technique and/or at least one surface modification technique without ablation of material by means of at least one laser followed by at least one treatment with a plasma; and/or (ii) the marking element can be read out by means of at least one camera and/or light, preferably light emitted by at least one laser and/or at least one light emitting diode, preferably the light having a wave length in the visible, infrared and/or ultra violet light spectrum.

A laser, such as a CO₂ laser, a Diode Pumped Solid State (DPSS) Laser, a fiber laser or a Flash Lamp Pumped Solid State laser, is commercially available, hence, this provides a straight-forward way of implementation. Indeed, UV lasers might also be particularly preferred, preferably having a wavelength of 250 to 500 nm. They are suitable for ablating techniques since they are fast and reliable and allows fabricating small structures. However, also lasers having a wavelength between 250 and 600 nm might preferably be employed. Furthermore, dry etching techniques are also preferred because they can be particularly used in the field of pharmaceutical containers since no contaminants are produced during application.

A machine-readable marking element allows for an automation of the processes the container is involved in. For example with a readable marking element by means of a camera and/or a light source a commercially available solution with a straightforward implementation of the reading procedure is possible.

In one embodiment alternatively or in addition the combination of the following features are particularly preferred: the marking element: is produced by means of at least one laser ablation technique, at least one etching technique, preferably at least one dry etching technique, at least one lithographic technique, at least one sandblasting technique, at least one surface modification technique without ablation of material by means of at least one laser followed by at least one treatment with a plasma; can be produced by means of at least one laser ablation technique, at least one etching technique, preferably at least one dry etching technique, at least one lithographic technique, at least one sandblasting technique and/or at least one surface modification technique without ablation of material by means of at least one laser followed by at least one treatment with a plasma.

In one embodiment alternatively or in addition the combination of the following features are particularly preferred: the marking element can be read out by means of at least one camera; the marking element can be read out by means of light, preferably light emitted by at least one laser, preferably the light having a wave length in the visible light spectrum; the marking element can be read out by means of at least one camera; the marking element can be read out by means of light, preferably light emitted by at least one laser, preferably the light having a wave length in the infrared light spectrum; the marking element can be read out by means of at least one camera; the marking element can be read out by means of light, preferably light emitted by at least one laser, preferably the light having a wave length in the ultra violet light spectrum; the marking element can be read out by means of light, preferably light emitted by at least one light emitting diode, preferably the light having a wave length in the visible light spectrum; the marking element can be read out by means of light, preferably light emitted by at least one light emitting diode, preferably the light having a wave length in the infrared light spectrum; and/or the marking element can be read out by means of light, preferably light emitted by at least one light emitting diode, preferably the light having a wave length in the ultra violet light spectrum.

In one preferred embodiment the marking element is produced or can be produced by means of at least one laser ablation technique.

In one embodiment of the first, second and third aspect it is alternatively or in addition preferred that the container, preferably the body, (i) comprises or consists of glass, preferably silicate glass such as alumosilicate glass and/or borosilicate glass, and/or at least one polymer material; and/or (ii) is designed at least partly in form of a syringe, in form of a cartridge, in form of a vial and/or in form of another pharmaceutical container, wherein preferably the bottom of the body has at least partially a concave shape, wherein preferably the center of the osculating circle at at least one point of the bottom of the body lies on the side opposite to the body with respect to the body's bottom.

If the container (preferably the body thereof) is designed such that it has a concave bottom, a code graved into the bottom, preferably into the outer surface of the bottom, it can be better protected from mechanical damages.

In one embodiment alternatively or in addition the combination of the following features are particularly preferred: the container, preferably the body: comprises or consists of glass, preferably silicate glass such as alumosilicate glass; comprises borosilicate glass; comprises at least one polymer material; is designed at least partly in form of a syringe tube; is designed at least partly in form of a cartridge; is designed at least partly in form of a vial; is designed at least partly in form of another pharmaceutical container; is designed at least partly in form of a cartridge, wherein the bottom of the body has at least partially a concave shape, wherein preferably the center of the osculating circle at at least one point of the bottom of the body lies on the side opposite to the container with respect to the body's bottom; is designed at least partly in form of a vial, wherein the bottom of the body has at least partially a concave shape, wherein preferably the center of the osculating circle at at least one point of the bottom of the body lies on the side opposite to the container with respect to the body's bottom; and/or is designed at least partly in form of another pharmaceutical container, wherein the bottom of the body has at least partially a concave shape, wherein preferably the center of the osculating circle at at least one point of the bottom of the body lies on the side opposite to the container with respect to the body's bottom.

In one preferred embodiment the container comprises or consists of glass and is designed in form of a vial.

In one embodiment of the first, second and third aspect it is alternatively or in addition preferred that the body is treated at least partially, preferably at the location of the marking element, with a tempering procedure, preferably at a temperature of between 300 °C and 400 °C and/or for a duration of between 10 and 25 minutes.

By respective tempering, it can be prevented that cracks, preferably cracks on a microscale, present in the body grow or extend further. Furthermore, it has been observed that respective tempering leads to a cleaning of the container, preferably the body, which is particularly useful in the field of pharmaceutical containers. Preferably, tempering has a sterilizing effect so that the container, preferably the body, becomes sterile. This is also particularly useful in the field of pharmaceutical containers.

In one embodiment alternatively or in addition the combination of the following features are particularly preferred: the body is treated at least partially, preferably at the location of the marking element, with a tempering procedure; the body is treated at least partially, preferably at the location of the marking element, with a tempering procedure, at a temperature of between 300 °C and 400 °C and for a duration of between 10 and 25 minutes; the body is treated at least partially, preferably at the location of the marking element, with a tempering procedure, at a temperature of between 300 °C and 400 °C; the body is treated at least partially, preferably at the location of the marking element, with a tempering procedure for a duration of between 10 and 25 minutes.

The problem is solved by the invention according to a fourth aspect by a method for producing a container for holding at least one pharmaceutical composition, comprising the steps:
- Providing at least one body, preferably a body which is at least in part hollow, has at least one closed end, has two open ends and/or has at least one opening;
- Identifying at least one location at the body, with the body at this location having at least one stress parameter which has, preferably under at least one state condition, a value less than or equal to at least one threshold value;
wherein the threshold value is derived and/or derivable from at least one simulation result of at least one simulation based on a finite element method of the stress parameter for at least one surface and/or volume area of the body with or without the marking element present; wherein at least one mean value is or can be obtained by means of the simulation for the stress parameter for at least a part of the surface and/or volume area of the body; wherein the threshold value is the sum of the mean value and 1000 % or less of the absolute value of the mean value.
- Providing at least one marking element, which allows to identify the container, at the identified location.

The invention is, thus, based on the surprising finding that during the manufacturing process of a container a marking element can be provided on the container, preferably on the body, by means of techniques which lead to a weakening of the material, for example due to material ablation, if the location of the marking element is chosen such that for the location of the marking element one or more stress parameters are restricted to a certain threshold value. Locations fulfilling this criterion can be used for permanently graving the marking element into the container while still ensuring a high strength of the container irrespective of the damages the marking element represents in the structure of the body.

With respect to the further advantages arising from choosing the location dependent on the stress parameter reference is made to the comments provided above with respect to the first aspect of the invention, which apply here mutatis mutandis, too.

In one embodiment of the fourth aspect it is alternatively or in addition preferred that identifying the location at the body comprises the step of:
- Evaluating the simulation results of the body and identifying at least one area where the stress parameter has a value, preferably an averaged value of that stress parameter over that area, less than the threshold value; and
- Choosing the location such that it is at least partly within the identified area.

The area which is identified as being a preferred location for the marking element can be chosen such that at least one value of the stress parameter obtained by the simulation for that area fulfills the threshold criterion. Hence, the area in every point fulfills the threshold criterion.

Alternatively, the preferred location can be chosen such that an averaged value of that stress parameter obtained by the simulation for that area fulfills the threshold criterion. This allows that the identified area might have single points which do not fulfill the criterion, however, in average the area does so. This allows a practical and a more robust approach.

In one embodiment of the fourth aspect it is alternatively or in addition preferred that providing the marking element comprises the step of: ablating and/or etching at the identified location material from at least one surface area of the body, preferably by means of at least one first laser, at least one etching technique, preferably at least one dry etching technique, at least one lithographic technique, at least one sandblasting technique, at least one surface modification technique without ablation of material by means of at least one laser followed by at least one treatment with a plasma, and/or manipulating at the identified location at least one volume area of the body, preferably by means of the first laser, hence, creating a marking element, preferably a data code, which preferably can be read out by means of at least one camera and/or light, preferably light emitted by at least one second laser and/or at least one light emitting diode, preferably the light having a wave length in the visible, infrared and/or ultra violet light spectrum, wherein preferably the first laser (i) is a Diode Pumped Solid State (DPSS) Laser, a fiber laser, an UV laser, a CO₂ laser or a Flash Lamp Pumped Solid State laser, (ii) is a pulsed laser, preferably (a) having a pulse duration between 100 ps and 500 ns, preferably 100 ns, (b) having a pulse energy between 1 and 500 µJ, (c) having a pulse repetition rate between 10 and 400 kHz, and/or (d) having a RMS power of between 1 and 100 watts, preferably 5 watts, and/or (iii) has a wavelength between 250 and 600 nm, preferably 368 nm.

Using a laser, such as a CO₂ laser, a Diode Pumped Solid State (DPSS) Laser, a fiber laser or a Flash Lamp Pumped Solid State laser, is a preferred technique in the pharmaceutical field because it allows to produce very small structures. Indeed, UV lasers might also be particularly preferred, preferably having a wavelength of 250 to 500 nm. They are suitable for ablating techniques since they are fast and reliable and allows fabricating small structures. However, also lasers having a wavelength between 250 and 600 nm might preferably be employed.

Using a dry etching technique is also a preferred technique in the pharmaceutical field because no contaminations occur. Dry etching and laser are both plasma/solid interactions.

In one embodiment of the fourth aspect it is alternatively or in addition preferred that providing the marking element comprises the step of: ablating and/or etching at the identified location material from at least one surface area of the body, preferably by means of at least one first laser, at least one etching technique, preferably at least one dry etching technique, at least one lithographic technique, at least one sandblasting technique, at least one surface modification technique without ablation of material by means of at least one laser followed by at least one treatment with a plasma, and/or manipulating at the identified location at least one volume area of the body, preferably by means of the first laser, hence, creating a marking element, preferably a data code, which preferably can be read out by means of at least one camera and/or light, preferably light emitted by at least one second laser and/or at least one light emitting diode, preferably the light having a wave length in the visible, infrared and/or ultra violet light spectrum, wherein preferably the first laser (i) is a Diode Pumped Solid State (DPSS) Laser, a fiber laser, a UV laser, a CO2 laser or a Flash Lamp Pumped Solid State laser, (ii) is a pulsed laser, preferably (a) having a pulse duration between 100 ps and 500 ns, preferably 100 ns, (b) having a pulse energy between 1 and 500 µJ, (c) having a pulse repetition rate between 10 and 400 kHz, and/or (d) having a RMS power of between 1 and 100 watts, preferably 5 watts, and/or (iii) has a wavelength between 250 and 6500 nm, preferably 368 nm.

By respective tempering it can be prevented that cracks present in the body, particularly cracks on a microscale, further extend. Furthermore, it has been observed that respective tempering lead to a cleaning of the container, preferably the body, which is particular useful in the field of pharmaceutical containers.

In one embodiment if providing the marking element comprises the step of: ablating at the identified location material from at least one surface area of the body is particularly preferred.

In one embodiment a UV laser is particularly preferred.

In one embodiment of the fourth aspect it is alternatively or in addition preferred that the method further comprises the step of: treating the body at least in part, preferably at the location of the marking element, with a tempering procedure, preferably at a temperature of between 300 °C and 400 °C and/or for a duration of between 10 and 25 minutes.

The person skilled in the art clearly understands that all structural features disclosed with respect to any one of the first, second and third aspect of the invention might also be subject to features of the fourth aspect of the invention.

Further relevant aspects of the invention are discussed below:
As mentioned above, for glass containers, such as glass vials, used in the pharmaceutical industry, axial compression and side compression have been identified as common and typical load situations during handling, processing and transportation. Both types of compression might lead to compression stresses and/or tensile stresses. Preferably, these stresses occur in the outer and/or inner surface of the container, preferably the body thereof.

In one embodiment, the container, preferably the body, is a vial.

In one embodiment alternatively or in addition the vial might be a vial of size 2R, 4R, 6R, 8R 10R, 15R, 20R, 25R, 30R, 50R, 100R.

In one embodiment alternatively or in addition the two types of loads might occur in different surface and/or volume regions of the container, preferably the body. For example the side compression occurs in the area of the neck and and/or the axial compression occurs in the area of the bottom.

It is particularly noted that the axial and side compression strength can be verified by appropriate strength experiments: Axial compression strength for example of vials can be tested according to DIN EN ISO 8113:2004 by application of an axial compression load with a constant load rate until failure of the specimen. Side compression strength of vials can be tested by application of a radial (diametral/side) compression load with a constant load rate until failure of the specimen.

The inventors have particularly identified the following situations with respect to axial compression: For example during packaging of the containers they experience pressure from above, hence axial compression. This is the case because for example the containers are stacked onto each other. Also during freeze-drying (lyophilization) typically axial compression occurs. This is the case because in one application of freeze-drying a holder is attached to the container, such as a vial, preferably a glass vial, for holding it. This causes mechanical stresses in form of axial compression to the container. In another application of freeze-drying alternatively or in addition the container is put on a cooling plate and pressed from above. This causes mechanical stresses in form of axial compression to the container as well. Also when the container is closed, preferably using a crimp closure, axial compression occurs.

Of course, under both, axial compression and side compression, tensile stresses can occur. And under both, axial compression and side compression, compression stresses can occur.

It is acknowledged that under axial load axial compression takes place. It is acknowledged that under side load side compression takes place.

The inventors have particularly identified the following situations with respect to side compression: For example during handling of the container side compression occurs in the container.

As a tendency it can be said that locations where tensile stresses are low are preferred for providing a marking element and/or that locations where the absolute value of the compression stresses are high are preferred for providing a marking element. It is noted that tensile stresses are characterized by a positive value while compressive stresses are characterized by a negative value. Thus, high absolute values of compressive stresses mean that there is a high compressive stress.

It has been particularly found by the inventors that in one embodiment locations with tensile stresses of up to 150 MPa might still be considered as being a preferred location for the marking element.

In the context of the invention, every pharmaceutical composition which the skilled person deems suitable comes into consideration. A pharmaceutical composition is a composition comprising at least one active ingredient. A preferred active ingredient is a vaccine, an antibody or other biological agent. The pharmaceutical composition may be fluid or solid or both, wherein a fluid composition is particularly preferred herein. A preferred solid composition is granular such as a powder, a multitude of tablets or a multitude of capsules. A further preferred pharmaceutical composition is a parenteral, i.e. a composition which is intended to be administered via the parenteral route. Parenteral administration can be performed by injection, e.g. using a needle (usually a hypodermic needle) and a syringe, or by the insertion of an indwelling catheter.

Further relevant aspects concerning the container are now discussed. For the sake of this discussion it is assumed that the container, preferably the body thereof, is preferably made of glass. It is furthermore assumed that the container is designed preferably in form of a vial. But, of course, every other type of container might be possible as well.

The above described pharmaceutical glass containers should be characterized by sufficiently high strength, particularly if they are filled in automated capping machines in which substantial axial loads are applied to the vials. Higher axial loads may also be observed when glass vials are used in automated sampling machines in scientific labs or medical institutions as well as during stoppering, shipping, and storage of glass vials. In addition to a certain resistance to axial loads glass containers should also display sufficiently high burst strength. Burst pressure testing is, for example, appropriate for assessing container strength during lyophilisation to find the weakest point on the interior or exterior surface of a container.

Burst strength of pharmaceutical glass containers becomes important if pharmaceutical preparations, after they have been filled in a glass container, are subjected to lyophilisation.

As the use of glass containers in pharmaceutical industry only allows a very low failure probability upon application of mechanical stress or pressure changes, glass containers intended for the filling of pharmaceutical preparations should therefore be characterized by sufficiently high strength, particularly by the ability to withstand high axial loads and by sufficiently high burst strength.

In addition it should have the ability to withstand a certain pressure in the below described side compression test.

In the pharmaceutical industry, containers are used for the primary packaging of drugs. Among the traditionally most used materials is a glass container, as it ensures stability, visibility, endurance, rigidity, moisture resistance, ease of capping, and economy. The glass containers for medicinal purposes currently on the market include glass containers, made from glass tubing and blow-molded glass containers.

Glass vials that are intended for pharmaceutical packaging must pass numerous mechanical tests. High axial loads that are determined in a so called "vertical compression test" (or also called "axial compression test") may, for example, be required if glass vials are used in automated sampling machines in scientific labs or medical institutions as well as during stoppering, shipping, and storage of glass vials. In addition to a certain resistance to axial loads, glass containers should also display sufficiently high burst strength as determined in the so-called "burst pressure test". Burst pressure testing is, for example, appropriate if pharmaceutical preparations, after they have been filled in a glass container, are subjected to lyophilisation in order to find the weakest point on the interior or exterior surface of a container.

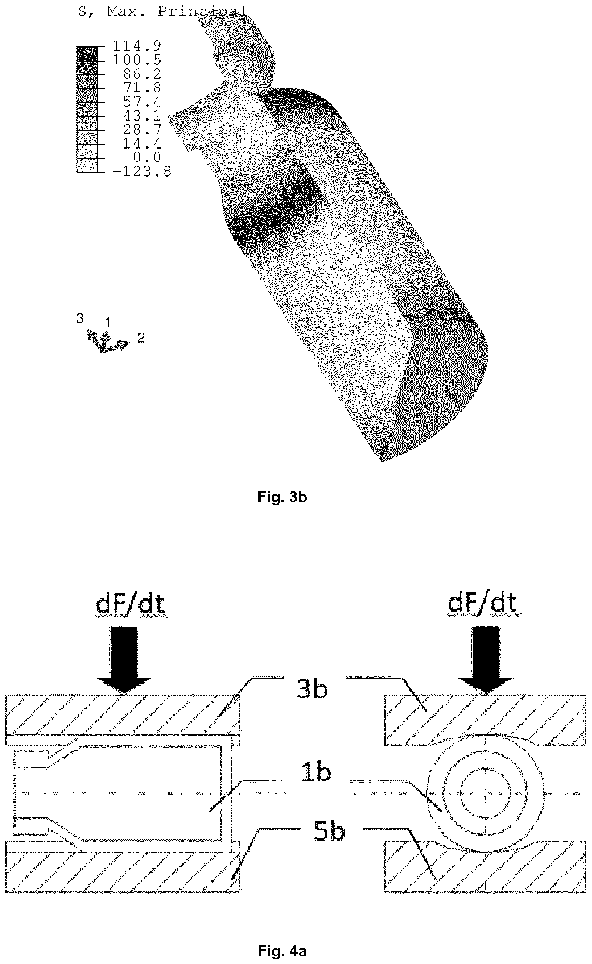

A further mechanical test that is often used to determine the mechanical strength of a glass vial is the so called "side compression test". This test is used, for example, to determine the impact that a certain back pressure may have on the glass vials during transport in a depyrogenation tunnel or generally during transport on a filling line. In this test the glass vials are positioned between an upper and a lower portion of a test tool as shown in Fig. 4a (and described in more detail below), wherein a defined load is applied directly onto the body region of the glass vial.

The glass container according to the invention or the glass container contained in the plurality of glass containers according to the invention may have any size or shape which the skilled person deems appropriate in the context of the invention. Preferably, the top region of the glass container comprises an opening, which allows for inserting a pharmaceutical composition into the interior volume of the glass container. The glass container comprises as container parts a glass tube with a first end and a further end and a glass bottom that closes the glass tube at the further end. Preferably, the glass container is of a one-piece design that is prepared by providing a glass tube and by closing one end thereof (i. e. the end that will be the opening of the glass container) so as to obtain a top region, a junction region, a neck region and a shoulder region followed by a step of shaping the further end of the glass tube so as to obtain a closed glass bottom. A preferred glass container is a pharmaceutical glass container, more preferably one selected from the group consisting of a vial, an ampoule or a combination thereof, wherein a vial is particularly preferred.

The glass of the container may be any type of glass and may consist of any material or combination of materials which the skilled person deems suitable in the context of the invention. Preferably, the glass is suitable for pharmaceutical packaging. Particularly preferable, the glass is of type I, more preferably type I b, in accordance with the definitions of glass types in section 3.2.1 of the European Pharmacopoeia, 7th edition from 2011. Additionally or alternatively, the glass is selected from the group consisting of a borosilicate glass, an aluminosilicate glass, soda lime glass and fused silica; or a combination of at least two thereof. For the use in this document, an aluminosilicate glass is a glass which has a content of Al₂O₃ of more than 8 wt.-%, preferably more than 9 wt.-%, particularly preferable in a range from 9 to 20 wt.-%, in each case based on the total weight of the glass. A preferred aluminosilicate glass has a content of B₂O₃ of less than 8 wt.-%, preferably at maximum 7 wt.-%, particularly preferably in a range from 0 to 7 wt.-%, in each case based on the total weight of the glass. For the use in this document, a borosilicate glass is a glass which has a content of B₂O₃ of at least 1 wt.-%, preferably at least 2 wt.-%, more preferably at least 3 wt.-%, more preferably at least 4 wt.-%, even more preferably at least 5 wt.-%, particularly preferable in a range from 5 to 15 wt.-%, in each case based on the total weight of the glass. A preferred borosilicate glass has a content of Al₂O₃ of less than 7.5 wt.-%, preferably less than 6.5 wt.-%, particularly preferably in a range from 0 to 5.5 wt.-%, in each case based on the total weight of the glass. In a further aspect, the borosilicate glass has a content of Al₂O₃ in a range from 3 to 7.5 wt.-%, preferably in a range from 4 to 6 wt.-%, in each case based on the total weight of the glass.

A glass which is further preferred according to the invention is essentially free of boron (B). Therein, the wording "essentially free of B" refers to glasses which are free of B which has been added to the glass composition by purpose. This means that B may still be present as an impurity, but preferably at a proportion of not more than 0.1 wt.-%, more preferably not more than 0.05 wt.-%, in each case based on the weight of the glass.

### Axial load and burst pressure

The mechanical resistance against axial compression of the vial can be determined by means of vertical load strength testing in accordance to DIN EN ISO 8113:2004 ("Glass containers - Resistance to vertical load - Test methods"), where a compressive force is applied in axial direction and is increased with a constant load rate of 500 N/min until breakage of the container.

The mechanical resistance against internal pressure of the vial is determined by means of burst strength testing in accordance to DIN EN ISO 7458:2004 ("Glass containers - Internal pressure resistance - Test methods"), where a hydraulic pressure is applied from inside of the vial and is increased with a constant load rate of 5.8 bar/s until breakage of the container.

### Side compression test

The mechanical resistance of the vial body section against diametral compression can be determined by means of a diametral load strength testing adapted from DIN EN ISO 8113:2004 ("Glass containers - Resistance to vertical load - Test methods"), where a compressive force is applied in diametral (radial) direction at two opposing positions of the vial body outer surface geometry. The compressive force is increased at a constant load rate of 1500 N/min until breakage of the container using a universal testing machine (breakage can again be detected as a sudden drop in the force- time diagram F(t)). The diametral load is applied by two opposing, uniaxial concave steel surfaces, between which the body section of the vial is placed parallel to the axis. One of the concave surfaces is constructed to be self-adjusting to be able to compensate geometrical irregularities. The radius of the concavity of the two steel surfaces is 25% larger than the radius of the outer diameter of the body section, so that the load is applied along two opposing lines. The width of the concave steel surfaces is chosen to be larger than the height of the vial body section.

### Neck squeeze test

The mechanical resistance of the vial neck section against diametral compression can be determined by means of a diametral load strength testing adapted from DIN EN ISO 8113:2004 ("Glass containers - Resistance to vertical load - Test methods"), where a compressive force is applied in diametral (radial) direction at two opposing positions of the vial neck outer surface geometry. The compressive force is increased at a constant load rate of 2000 N/min until breakage of the container using a universal testing machine (breakage can be detected as a sudden drop in the force-time diagram F(t)). The diametral load is applied by two opposing, uniaxial concave steel surfaces, between which the neck section of the vial is placed parallel to the axis. One of the concave surfaces is constructed to be self-adjusting to be able to compensate geometrical irregularities. The radius of the concavity of the two steel surfaces is 25% larger than the radius of the outer diameter of the neck section, so that the load is applied along two opposing lines. The width of the concave steel surfaces is chosen to be slightly shorter than the height of the vial neck section.

### Figures

Various aspects of this invention will become apparent to those skilled in the art from the following detailed description of a preferred embodiment, when read in light of the accompanying drawings.
- Fig. 1: shows an illustration of a container having at the bottom a marking element according to the first, second and third aspect of the invention;
- Fig. 2a-2c: show different exemplary marking elements graved into glass;
- Fig. 3a: shows an illustration of a setup for an axial compression test;
- Fig. 3b: shows an exemplary contour plot of the stress distribution on an outer surface of a specimen under the axial compression test;
- Fig. 4a: shows an illustration of a setup for a side compression test;
- Fig. 4b: shows an exemplary contour plot of the stress distribution on an outer surface of a specimen under the side compression test;
- Fig. 5: shows a perspective cut-view of a model of a vial having different parts;
- Fig. 6a: shows a contour plot of the stress distribution of the vial shown in Fig. 9 under axial compression;
- Fig. 6b: shows a contour plot of the stress distribution of the cylindrical wall of the vial shown in Fig. 9 under axial compression;
- Fig. 6c: shows a contour plot of the stress distribution of the heel of the vial shown in Fig. 9 under axial compression;
- Fig. 6d: shows a contour plot of the stress distribution of the bottom of the vial shown in Fig. 9 under axial compression;
- Fig. 7a: shows a contour plot of the stress distribution of the vial shown in Fig. 9 under side compression;
- Fig. 7b: shows a contour plot of the stress distribution of the cylindrical wall of the vial shown in Fig. 9 under side compression;
- Fig. 7c: shows a contour plot of the stress distribution of the heel of the vial shown in Fig. 9 under side compression;
- Fig. 7d: shows a contour plot of the stress distribution of the bottom of the vial shown in Fig. 9 under side compression; and
- Fig. 8: shows a flow chart of a method according to the fourth aspect of the invention.

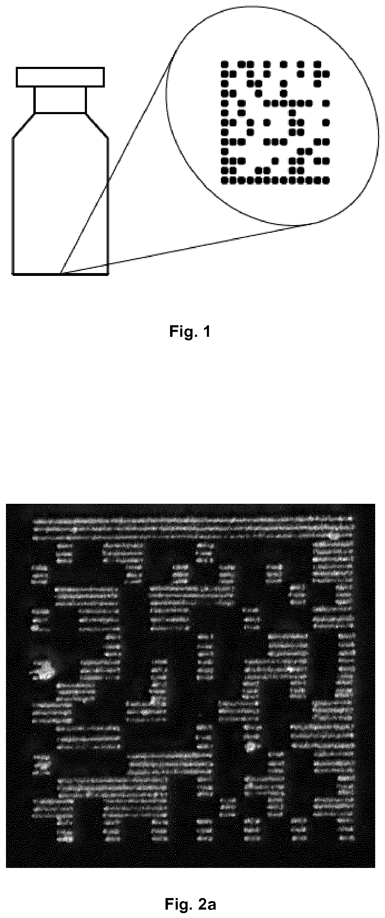

Fig. 1 shows an illustration of a container in form of a vial with a marking element indicated on the bottom of the vial.

Fig. 2a shows a marking element in a close up view. The marking element here is graved into a glass substrate for demonstration purposes.

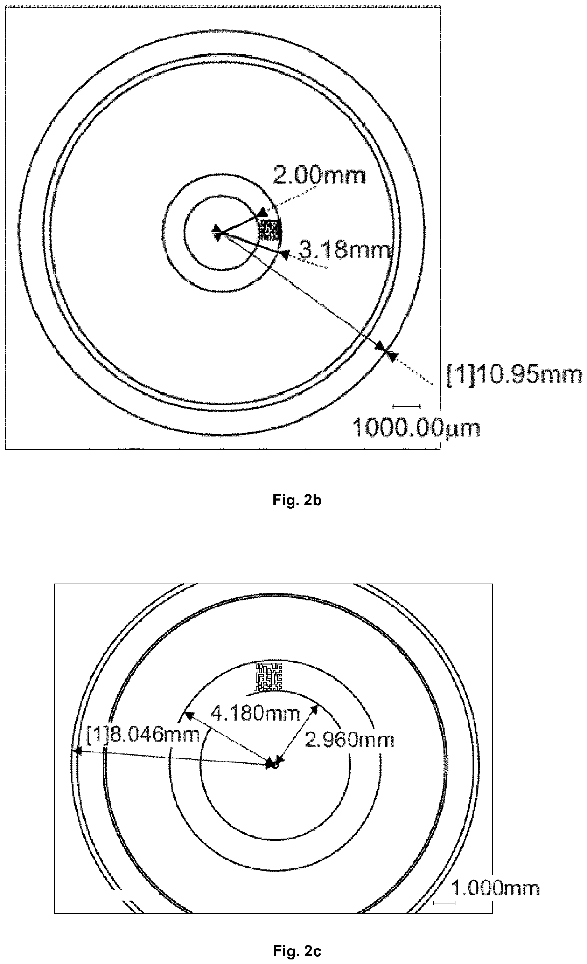

Fig. 2b shows another marking element graved into the bottom outer surface of a glass vial. From the captions shown in the figure dimensions of the marking element can be deduced. In a first direction the extension of the marking element is 1.18 mm. Since the marking element is square of shape, it has also in a second direction an extension of 1.18 mm.

Fig. 2c shows another marking element graved into the bottom outer surface of a glass vial. From the captions shown in the figure dimensions of the marking element can be deduced. In a first direction the extension of the marking element is 1.22 mm. Since the marking element is square of shape, it has also in a second direction an extension of 1.22 mm.

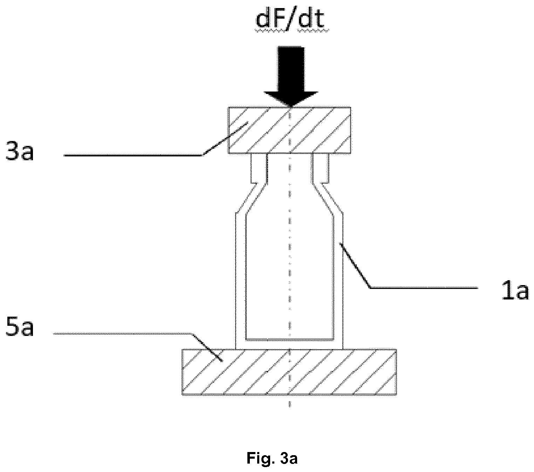

Fig. 3a shows an illustration of a setup for an axial compression test. This setup allows to verify the axial compression strength. Axial compression strength, for example of a glass vial 1a, can be tested according to DIN EN ISO 8113:2004 by application of an axial compression load F with a constant load rate until failure of the specimen (vial 1a). The vial 1a here is sandwiched between a self-adjusting steel plate 3a and a rigid steel plate 5a.

Fig. 3b shows an exemplary contour plot of the stress distribution on the outer surface of a 2 mL tubular glass vial under axial compression as it might be obtained by means of the axial compression test described with respect to Fig. 3a.

Fig. 4a shows an illustration of a setup for a side compression test. This setup allows to verify the side compression strength. Side compression strength, for example of a glass vial 1b, can be tested adapted from DIN EN ISO 8113:2004 (see for further details the respective section dealing with the side compression test above) by application of an side compression load F with a constant load rate until failure of the specimen (vial 1b). The vial 1b here is sandwiched between a self-adjusting steel plate 3b and a rigid steel plate 5b.

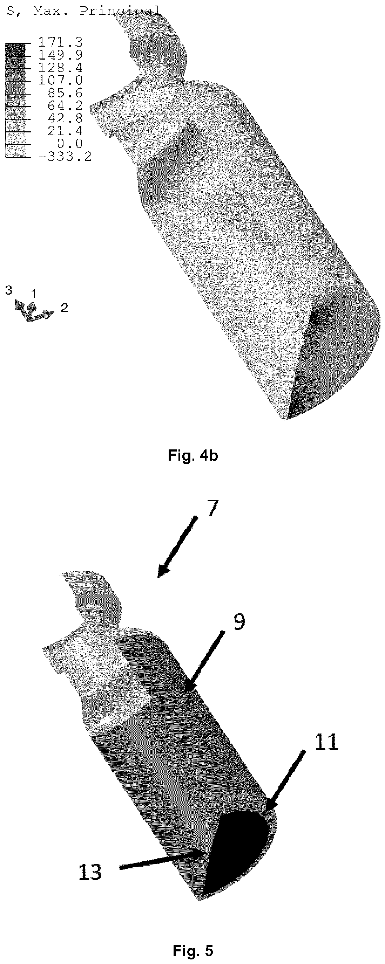

Fig. 4b shows an exemplary contour plot of the stress distribution on the outer surface of a 2 mL tubular glass vial under side compression as it might be obtained by means of the side compression test described with respect to Fig. 4a.

From Fig. 3b and Fig. 4b can be deduced that both load situations induce comparatively low tensile stresses (or they induce even compression stresses) in the center of the vial base outer surface. This might be an indicator that this is a preferred position for laser marking.

It is in this respect noted that the strength of glass can be regarded as a projection of its surface quality, hence varying with the surface conditions depending on handling, processing and transportation. However, typical (tensile) strength values for glass products range between approximately 30 and 70 MPa. Accordingly, a value of tensile stress of 70 MPa appears as a reasonable lower specification limit of strength for laser markings. Inducing tensile stresses of 70 MPa on the vial base outer surface requires different magnitudes of compression forces, depending on the vial geometry and the load situation.

It is obvious from these figures that under different loads there are different critical regions present. However, the inventive concept allows to identify the location based on the simulation results such, that only low tensile stresses (or even compressive stresses) are present, hence, a marking element can be provided at respective locations without the risk of less stability of the vial. This is particularly true because locations having tensile stresses must be avoided while locations having compressive stresses might be advantageous for providing a marking element.

In any event, based on the simulation results it is possible to determine a mean value of a stress parameter which in turn might serve as a relative value for setting the threshold value according to the invention (indeed, the mean value serves as basis to calculate a sum which in turn is relevant for the threshold value). This aspect also shows that dependent on the loads which probably are applied to the container (such as a vial, preferably a vial as shown in Fig. 3a and Fig. 4a) during use, the respective simulation data can be used for determining the threshold value. This constitutes a quite flexible approach.

In other words, if results such as the ones shown in Fig. 3b and 4b are obtained from a simulation of a vial which should be subject to marking it would be possible to define for the bottom of the vial a preferred location based on a mean value derived from the distributions. For example regions of the bottom of the vial having a tensile stress below a first threshold under a first state condition (being for example axial compression) and having a tensile stress below the first threshold under a second state condition (being for example side compression) might be preferred locations. And/Or for example regions of the bottom of the vial having a first principle stress less below a certain threshold under a certain state condition (being for example axial or side compression) might be preferred locations.

Fig. 5 shows a perspective cut-view of a model of a vial 7. In one embodiment the marking element must be provided on a pre-selected part of the container (preferably in form of the vial 7), for example due to certain specifications concerning accessibility of the marking element or the like. Such a part might be for example the cylindrical wall 9 of the vial, the heel 11 of the vial or the bottom 13 of the vial. It is then advantageous to limit the simulation to the respective part of the container so that only values from that part are taken into account for determining the mean value, hence, the threshold value.

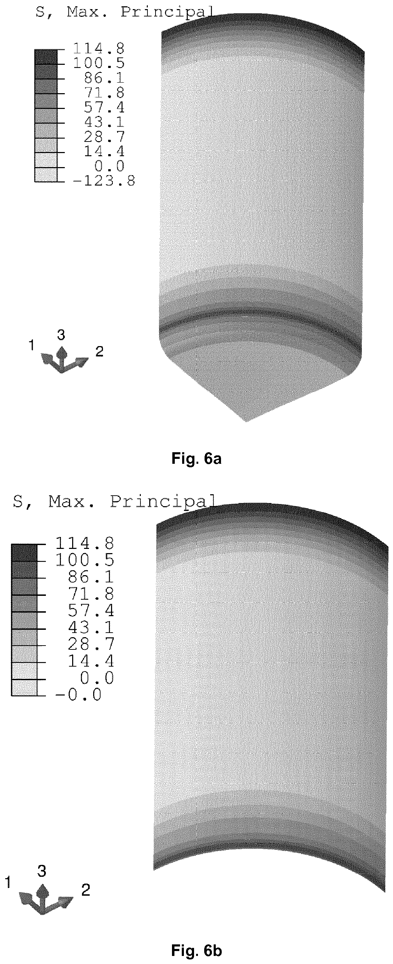

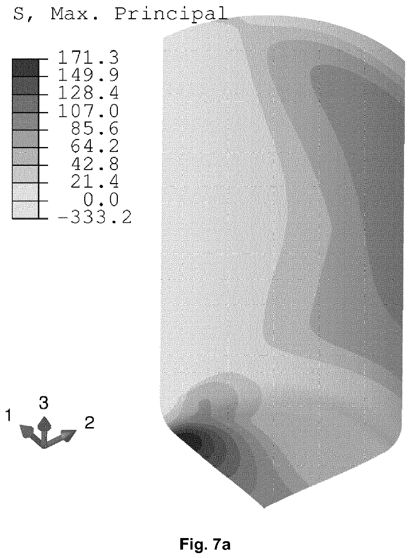

Figs. 6a-6d and Figs. 7a-7d show different contour plots of the distributions of the first principle stress under, respectively, axial compression and side compression as will be outlined in more detail below. The code of the key is chosen for Figs. 6a-6d and Figs. 7a-7d such that only tensile stresses are shown from light to dark. Compressive stresses (values less than zero) are represented light. It is always shown the first principle stress in the contour plots, which means that for each point the maximal stress is shown, independent from the direction of the stress. Each plot represent only one quarter of the complete element under consideration which is sufficient since the elements are rotational symmetric.

For the axial compression:
Figure 6a shows the contour plot of the entire vial 7 shown in Fig. 5. From the distribution the average weighted value for the first principle stress can be calculated to 15.7 MPa.

Figure 6b shows the contour plot of the cylindrical wall 9 of vial 7 only as shown in Fig. 5. From the distribution the average weighted value for the first principle stress can be calculated to 17.6 MPa.

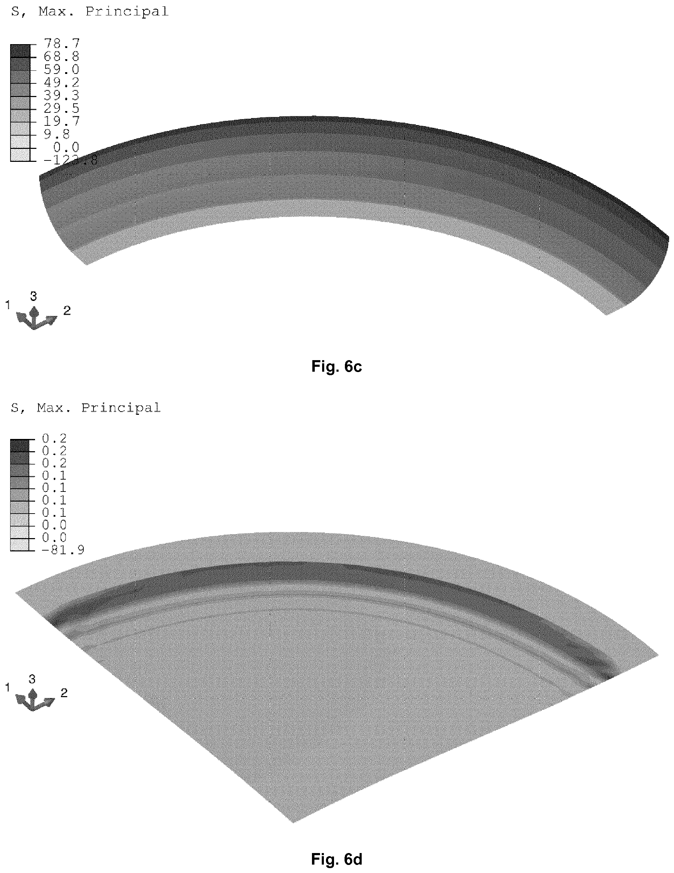

Figure 6c shows the contour plot of the heel 11 of vial 7 only as shown in Fig. 5. From the distribution the average weighted value for the first principle stress can be calculated to 22.2 MPa.

Figure 6d shows the contour plot of the bottom 13 of vial 7 only as shown in Fig. 5. From the distribution the average weighted value for the first principle stress can be calculated to -4.3 MPa.

For the side compression:
Figure 7a shows the contour plot of the entire vial 7 shown in Fig. 5. From the distribution the average weighted value for the first principle stress can be calculated to 28.0 MPa.

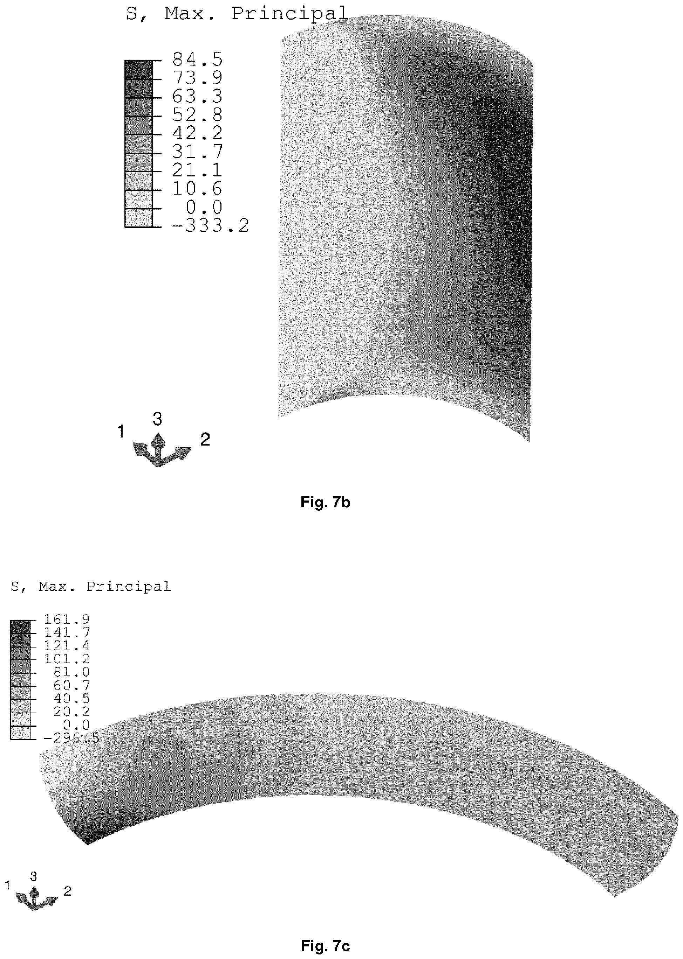

Figure 7b shows the contour plot of the cylindrical wall 9 of vial 7 only as shown in Fig. 5. From the distribution the average weighted value for the first principle stress can be calculated to 26.9 MPa.

Figure 7c shows the contour plot of the heel 11 of vial 7 only as shown in Fig. 5. From the distribution the average weighted value for the first principle stress can be calculated to 19.8 MPa.

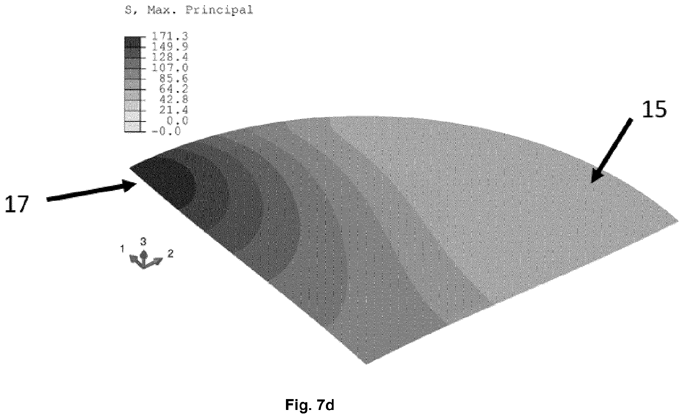

Figure 7d shows the contour plot of the bottom 13 of vial 7 only as shown in Fig. 5. From the distribution the average weighted value for the first principle stress can be calculated to 43.4 MPa.

The evaluation of Figs. 6a-6d and 7a-7d shows that dependent on the part of the vial 7 on which the marking element should be provided, different stress values, hence, different average weighted values are obtained from the simulation results depicted in the contour plots of Figs 6a-6d and 7a-7d. All the more, the results, hence the average values, are also different for axial and side compression. This in turn means that dependent on the part of the vial 7 which is considered for providing the marking element, a different threshold value is obtained. Or in other words, for different parts of the vial 7, the region identified as being "preferred" for providing a marking element can have different stress values, hence, different mean values, hence, different thresholds. Thus, while a threshold might be appropriate for determining a preferred location at the bottom under side compression, it might be inappropriate for determining a preferred location at another part under side compression.

Indeed, this makes it clear that the inventive concept can be applied independent on the geometry, size and shape of the respective container since the threshold is defined relative to the mean value.

For example assuming that a marking element must be necessarily provided on the bottom 13 of the vial 7 (since for example other parts of the vial are not accessible for writing and/or reading the marking element) as a pre-condition. Let now the relevant stress parameter be the first principle stress and let the state condition be 1700 N of side compression. Finally let the threshold value be the sum of the averaged weighted mean value and 100 % of the absolute value of the averaged weighted mean value (with the averaged weighted mean value obtained from the simulation). Consequently, in order to determine a location on which the marking element can be provided a simulation is run for the bottom 13 of the vial 7 with respect to the first principle stress with a side compression of 1700 N is applied.

The simulation then yields a contour plot as the one of Fig. 7d. From that the average weighted value for the first principle stress of 43.4 MPa can be obtained (see above). Finally, the threshold value is defined as being 43.4 MPa + 100 % of 43.4 MPa, hence, 86.8 MPa. As can be taken from the contour plot of Fig. 7d, approximately the right half part of the bottom 13 (area 15 in Fig. 7d) which is light might be an appropriate location for the marking element. In contrast the top left corner (area 17 in Fig. 7d) of the bottom 13 shown in Fig. 7d is dark and has a value of over 170 MPa, hence, the threshold criterion is not fulfilled and a marking element should not be provided at this location.

Of course, this was just an example for the purpose of demonstrating the comfortable application of the inventive approach.

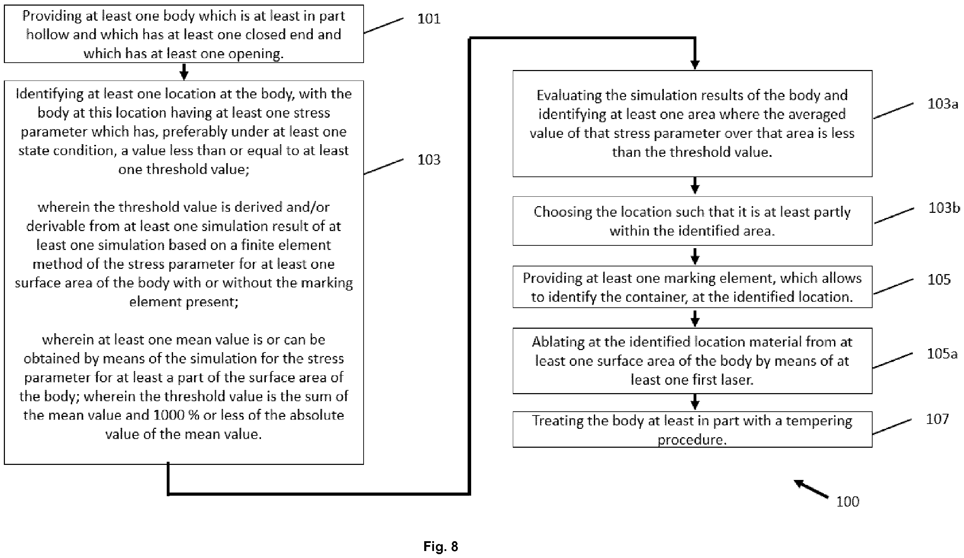

Figure 8 shows a flow chart of a method 100 according to the fourth aspect of the invention.

In a step 101 at least one body which is at least in part hollow and which has at least one closed end and which has at least one opening is provided. For example this body can be the vial the model of which is shown in Fig. 5.

In a step 103 at least one location at the body, with the body at this location having at least one stress parameter which has, preferably under at least one state condition, a value less than or equal to at least one threshold value is identified; wherein the threshold value is derived and/or derivable from at least one simulation result of at least one simulation based on a finite element method of the stress parameter for at least one surface area of the body with or without the marking element present; wherein at least one mean value is or can be obtained by means of the simulation for the stress parameter for at least a part of the surface area of the body; wherein the threshold value is the sum of the mean value and 1000 % or less of the absolute value of the mean value. For example the stress parameter might be the first principle stress.

For example the state condition might be 1700 N of side compression. For example the first surface of the body might be the surface of the bottom of the body. For example the threshold value might be 86.8 MPa, as it has been derived above with respect to Fig. 7d.

In a step 103a, which is comprised by the step 103, the simulation results of the body are evaluated and at least one area where the averaged value of that stress parameter over that area is less than the threshold value is identified.

For example this might be the right half part 15 of the bottom of the vial's body, see Fig. 7d.

In a step 103b, which is comprised by the step 103, the location is chosen such that it is at least partly within the identified area.

In a step 105 at least one marking element, which allows to identify the container at the identified location, is provided.

In a step 105a, which is comprised by the step 105, at the identified location material from at least one surface area of the body is ablated by means of at least one first laser. For example this might be performed using an UV laser.

In a step 107 the body is treated at least in part with a tempering procedure.

Of course, even if the preferred embodiments discussed above with respect to the Figures are referring to a certain product such as a vial or syringe, the person skilled in the art clearly understands that the discussed aspects apply accordingly to containers of other shape, geometry and size as well.

The principle and mode of operation of this invention have been explained and illustrated in its preferred embodiment. However, it must be understood that this invention may be practiced otherwise than as specifically explained and illustrated without departing from its spirit or scope.

### Reference List

- 1a, 1b: Vial
- 3a, 3b: Steel plate
- 5a, 5b: Steel plate
- 7: Vial
- 9: Wall
- 11: Heel
- 13: Bottom
- 15: Area
- 17: Area
- 100: Flow chart
- 101-107: Step
- F: Load (Force)

## Claims

1. Container for holding at least one pharmaceutical composition,
the container comprising a body,
wherein the body comprises at at least one location at least one marking element, which allows to identify the container,
wherein at said location at least one stress parameter of the body has a value less than or equal to at least one threshold value;
wherein the threshold value is derived and/or derivable from at least one simulation result of at least one simulation based on a finite element method of the stress parameter for at least one surface and/or volume area of the body with or without the marking element present;
wherein at least one mean value is or can be obtained by means of the simulation for the stress parameter for at least a part of the surface and/or volume area of the body;
wherein the threshold value is the sum of the mean value and 1000 % or less of the absolute value of the mean value.

2. Container according to claim 1,
wherein the stress parameter is at least one parameter of the group consisting of: first principle stress, mechanically induced tensile stress, mechanically induced compressive stress, thermally generated stresses and/or chemically generated stresses.

3. Container according to claim 2, wherein
the mechanically induced tensile stress is mechanically induced tensile stress during use;
the mechanically induced compressive stress is mechanically induced compressive stress during use;
the thermally generated stress is tensile stresses and/or compressive stresses, preferably occurring in the body's volume and/or surface;
and/or
the chemically generated stress is tensile stresses and/or compressive stresses, preferably occurring in the body's volume and/or surface.

4. Container according to any one of the preceding claims,
wherein at said location the stress parameter of the body has a value less than or equal to the threshold value under at least one state condition, wherein preferably the simulation is run under the state condition.

5. Container according to claim 4, wherein the state condition comprises
an ambient pressure of the body of 1 bar;
and/or
at least one force acting radially and/or axially on at least one part of the body, preferably at the limit of the breaking strength of the body.

6. Container according to any one of the preceding claims,
wherein (i) each of two or more stress parameters of the body have a value less than or equal to respective two or more threshold values, preferably under the same or at least in part different two or more state conditions, and/or (ii) the stress parameter of the body has a value less than or equal to two or more threshold values under at least in part different two or more state conditions.

7. Container according to any one of the preceding claims, wherein the body
is designed at least in part as hollow body and/or as a tubular body;
has at least one closed end, hast two open ends and/or has at least one opening; and/or
has at least one inner surface which is or can be brought in contact with the pharmaceutical composition when the composition is held by the container and/or at least one outer surface which is not in contact with the composition when the composition is held by the container, wherein the location of the marking element extends across at least one area of the inner and/or outer surface.

8. Container according to any one of the preceding claims,
wherein the marking element is graved into at least one surface of the body, preferably the inner and/or outer surface, wherein the marking element is located at the bottom (13) of the body, preferably at the center thereof, and/or wherein the marking element, preferably when projected on at least one 2D plane, comprises at least one one-dimensional data code, at least one two-dimensional data code and/or at least one three-dimensional data code, preferably the data code allows for identification of the container.

9. Container according to claim 8,
wherein the data code, preferably when projected on at least one 2D plane, comprises a plurality of dot-like elements and/or line-like elements, preferably in form of at least one matrix code, preferably at least one dot matrix code.

10. Container according to any one of the preceding claims,
wherein the marking element is produced and/or can be produced by means of at least one laser ablation technique, at least one etching technique, preferably at least one dry etching technique, at least one lithographic technique, at least one sandblasting technique and/or at least one surface modification technique without ablation of material by means of at least one laser followed by at least one treatment with a plasma;
and/or
wherein the marking element can be read out by means of at least one camera and/or light, preferably light emitted by at least one laser and/or at least one light emitting diode, preferably the light having a wave length in the visible, infrared and/or ultra violet light spectrum.

11. Container according to any one of the preceding claims, wherein the container, preferably the body,
comprises glass, preferably silicate glass such as alumosilicate glass and/or borosilicate glass, and/or at least one polymer material;
and/or
is designed at least partly in form of a syringe, in form of a cartridge, in form of a vial (1 a, 1 b, 7) and/or in form of another pharmaceutical container, wherein preferably the bottom (13) of the body has at least partially a concave shape, wherein preferably the center of the osculating circle at at least one point of the bottom (13) of the body lies on the side opposite to the body with respect to the body's bottom (13).

12. Container according to any one of the preceding claims,
wherein the body is treated at least partially, preferably at the location of the marking element, with a tempering procedure, preferably at a temperature of between 300 °C and 400 °C and/or for a duration of between 10 and 25 minutes.

13. Method for producing a container for holding at least one pharmaceutical composition, preferably according to any one of the claims 1-12, comprising the steps:
providing at least one body, preferably a body which is at least in part hollow, has at least one closed end, has two open ends and/or has at least one opening; (101)
identifying at least one location at the body, with the body at this location having at least one stress parameter which has, preferably under at least one state condition, a value less than or equal to at least one threshold value;
wherein the threshold value is derived and/or derivable from at least one simulation result of at least one simulation based on a finite element method of the stress parameter for at least one surface and/or volume area of the body with or without the marking element present;
wherein at least one mean value is or can be obtained by means of the simulation for the stress parameter for at least a part of the surface and/or volume area of the body;
wherein the threshold value is the sum of the mean value and 1000 % or less of the absolute value of the mean value. (103)
providing at least one marking element, which allows to identify the container, at the identified location (105).

14. The method of claim 13, wherein identifying the location at the body comprises the step of:
evaluating the simulation results of the body and identifying at least one area where the stress parameter has a value, preferably an averaged value of that stress parameter over that area, less than the threshold value; (103a) and
choosing the location such that it is at least partly within the identified area (103b).

15. The method of any one of claims 13 to 14, wherein providing the marking element comprises the step of:
ablating and/or etching at the identified location material from at least one surface area of the body, preferably by means of at least one first laser, at least one etching technique, preferably at least one dry etching technique, at least one lithographic technique, at least one sandblasting technique, at least one surface modification technique without ablation of material by means of at least one laser followed by at least one treatment with a plasma, and/or manipulating at the identified location at least one volume area of the body, preferably by means of the first laser, hence, creating a marking element, preferably a data code, which preferably can be read out by means of at least one camera and/or light, preferably light emitted by at least one second laser and/or at least one light emitting diode, preferably the light having a wave length in the visible, infrared and/or ultra violet light spectrum, wherein preferably the first laser (i) is a Diode Pumped Solid State (DPSS) Laser, a fiber laser, an UV laser, a CO₂ laser or a Flash Lamp Pumped Solid State laser, (ii) is a pulsed laser, preferably (a) having a pulse duration between 100 ps and 500 ns, preferably 100 ns, (b) having a pulse energy between 1 and 500 µJ, (c) having a pulse repetition rate between 10 and 400 kHz, and/or (d) having a RMS power of between 1 and 100 watts, preferably 5 watts, and/or (iii) has a wavelength between 250 and 600 nm, preferably 368 nm. (105a)

16. The method of any one of claims 13 to 15, further comprising the step of:
treating the body at least in part, preferably at the location of the marking element, with a tempering procedure, preferably at a temperature of between 300 °C and 400 °C and/or for a duration of between 10 and 25 minutes. (107)
